# EUROPÄISCHE PATENTSCHRIFT

(11) **EP 0 562 483 B1**
(45) Veröffentlichungstag und Bekanntmachung des Hinweises auf die Patenterteilung: **16.10.1996**
(21) Anmeldenummer: 93104537.1
(22) Anmeldetag: 19.03.1993
(51) Int. Cl.: B60B 33/04, B62B 3/06

(54) **Gabelhubwagen**
Fork lift truck
Chariot élévateur à fourche

(30) Priorität: 26.03.1992 DE 4209862
(43) Veröffentlichungstag der Anmeldung: 29.09.1993
(73) Patentinhaber: Linde Aktiengesellschaft, 65189 Wiesbaden (DE)
(72) Erfinder: Cartier, Guy, F-86200 Loudun (FR)
(74) Vertreter: Schaefer, Gerhard, Dr.

(56) Entgegenhaltungen:
- EP-A- 0 064 269
- EP-A- 0 153 832
- DE-A- 1 906 079
- FR-A- 1 112 584
- GB-A- 830 167
- US-A- 1 788 391

## Beschreibung

Die Erfindung betrifft einen Gabelhubwagen, mit einem Antriebsrad und seitlichen Stützrädern wobei die Stützräder höhenverstellbar sind und jeweils das Stützrad in einer an einem vertikalen Zapfen drehbar gelagerten Halterung angeordnet ist und wobei der Zapfen in einer mit dem Gabelhubwagen fest verbundenen Buchse längsverschieblich ist.

Derartige Gabelhubwagen werden zum Beispiel als Niederhubwagen oder Kommissionierer in Geh-, Sitz- oder Standausführung eingesetzt. Oft sind diese Geräte deichselgelenkt. Zur Stabilitätsverbesserung von Gabelhubwagen sind seitlich beabstandet zum Antriebsrad als Nachlaufräder ausgebildete Stützräder vorgesehen, die meist federnd oder mit Spiel zur Fahrbahn aufgehängt sind, damit auch bei unebener Fahrbahnoberfläche das Antriebsrad genügend Traktion zum Vortrieb und Abbremsen des Fahrzeugs aufweist. Erst wenn sich der Gabelhubwagen aufgrund der Lastverteilung stärker neigt, wirken die Stützräder stabilitätserhöhend, da in dieser Betriebssituation die Federvorspannung verstärkt ist oder das Stützrad an einem Anschlag anliegt bzw. kein Spiel mehr vorhanden ist zwischen dem Stützrad und der Fahrbahn. Steht eine sehr ebene Fahrbahnoberfläche zur Verfügung, so können Stützräder ohne Spiel zur Fahrbahn oder mit größerer Federvorspannung vorgesehen werden. Dadurch ist die Stabilität des Gabelhubwagens verbessert, insbesondere dann, wenn Lasten transportiert werden, deren Schwerpunkt hoch liegt.

Ein Hubwagen, bei dem die Anpreßkraft der seitlichen Stützräder in Abhänigkeit von dem Gewicht der Last erhöht werden kann, ist aus der DE-A-19 06 076 bekannt. Aus der GB-A-830 167 ist ein Hubwagen mit seitlichen, balligen Stützkörpern bekannt, deren Abstand zum Boden mittels eines Gewindebolzens und eines Klemmkeils eingestellt und arretiert werden kann.

Es ist leicht einzusehen, daß, für Fahrzeuge mit Nachlaufrädern als Stützrollen, bei wechselnden Betriebsbedingungen, d.h. vor allem bei unterschiedlichen Fahrbahnoberflächen, keine der beschriebenen Ausführungen eine befriedigende Lösung darstellt.

Der vorliegenden Erfindung liegt die Aufgabe zugrunde, einen Gabelhubwagen der eingangs beschriebenen Art zur Verfügung zu stellen, der für den Einsatz bei wechselnden Betriebsbedingungen gut geeignet ist.

Diese Aufgabe wird erfindungsgemäß dadurch gelöst, daß der Zapfen zumindest in zwei Stellungen arretierbar ist, und daß die Buchse an einem stirnseitigen Ende Ausnehmungen unterschiedlicher Tiefe aufweist, die zum Eingriff mit einem mit dem Zapfen verbundenen Vorsprung vorgesehen sind. Mit dieser Vorrichtung kann der Gabelhubwagen leicht an unterschiedliche Betriebsbedingungen angepaßt werden.

In Weiterbildung der Erfindung wird vorgeschlagen, daR die Ausnehmungen am Umfang des unteren stirnseitigen Endes der Buchse verteilt sind.

Besonders zweckmäßig ist es, wenn jeweils Paare von Ausnehmungen gleicher Tiefe gebildet sind, die sich, im Querschnitt durch den Zapfen, gesehen derart gegenüberliegen, daß die Verbindungslinie der Vertiefungen die Mittelachse des Zapfens schneidet, wobei der Zapfen eine radiale Durchgangsbohrung aufweist, in der ein beidseitig aus der Durchgangsbohrung herausragender Stift angeordnet ist, dessen Enden in den Ausnehmungen eines zusammengehörigen Paares angeordnet sind. Eine solche Bauweise ist mit einfachen Mitteln und daher kostensparend realisierbar.

Es erweist sich als vorteilhaft, wenn der Zapfen in vertikaler Richtung nach oben federkraftbelastet ist. Die Höhenverstellung der Stützräder erfolgt daher ganz einfach dadurch, daß jeweils der Zapfen entgegen der Federkraft nach unten gedrückt und daran anschließend so weit gedreht wird, bis ein Ausnehmunspaar in der Buchse gefunden ist, das die gewünschte Tiefe aufweist. Daraufhin wird der Zapfen wieder entlastet, wodurch die Enden des Stifts in die beiden Ausnehmungen des neuen Ausnehmungspaars einrasten.

Zweckmäßigerweise ragt das obere Ende des Zapfens in jeder Höheneinstellung aus dem oberen Ende der Buchse heraus und ist mit einem Teller versehen, wobei zwischen dem Teller und einem an der Buchse gebildeten Absatz eine Druckfeder angeordnet ist.

Wenn in der das Stützrad aufnehmenden Halterung ein das Stützrad zur Fahrbahn hin elastisch beaufschlagendes Vorspannungselement angeordnet ist, so kann durch die erfindungsgemäße Höhenverstellung die Vorspannung der Stützräder zur Fahrbahn variiert werden.

Besonders zweckmäßig ist die Anwendung der Erfindung bei einer Konstruktion, bei der in der Halterung ein um eine horizontale Achse schwenkbarer Kniehebel angeordnet ist, an dessen ersten Hebelarm das Stützrad befestigt ist und zwischen dessen zweiten Hebelarm und einer an der Halterung gebildeten Gegenlagerung ein auf Druck belastetes Gummi- oder elastisches Kunststoff element angeordnet ist.

Weitere Vorteile und Einzelheiten der Erfindung werden anhand eines in den Figuren schematisch dargestellten Ausführungsbeispieles näher erläutert. Dabei zeigt:
- Figur 1a: eine Ansicht der Frontseite eines Gabelhubwagens;
- Figur 1b: eine Seitenansicht des Gabelhubwagens;
- Figur 1c: eine Draufsicht auf den Gabelhubwagen;
- Figur 2a: einen Längsschnitt durch eine Anordnung mit einem Stützrad;
- Figur 2b: eine Vorderansicht eines Teils der Anordnung nach Figur 2a;
- Figur 3a: eine Seitenansicht der Anordnung gemäß Figur 2a;
- Figur 3b: eine Seitenansicht der Anordnung gemäß Figur 2a bei einer anderen Höheneinstellung des Stützrads.

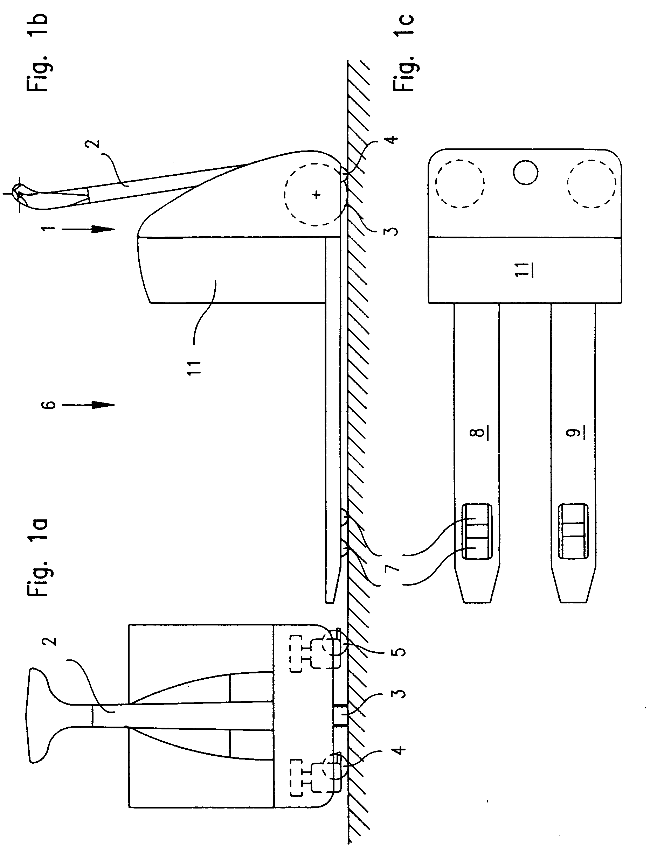

Der in den Figuren 1a bis 1c dargestellte, als Elektro-Deichsel-Hubwagen ausgebildete Gabelhubwagen weist ein Antriebsteil 1 mit einer Deichsel 2, einem Antriebsrad 3 und zwei seitlich des Antriebsrades 3 beabstandeten Stützrädern 4 und 5 auf. Gelenkig mit dem Antriebsteil 1 verbunden ist ein hebbarer Lastteil 6, der zwei mit Lastrollen 7 versehene Lastarme 8 und 9 aufweist und auf dem eine Batterieaufnahmevorrichtung 11 angeordnet ist.

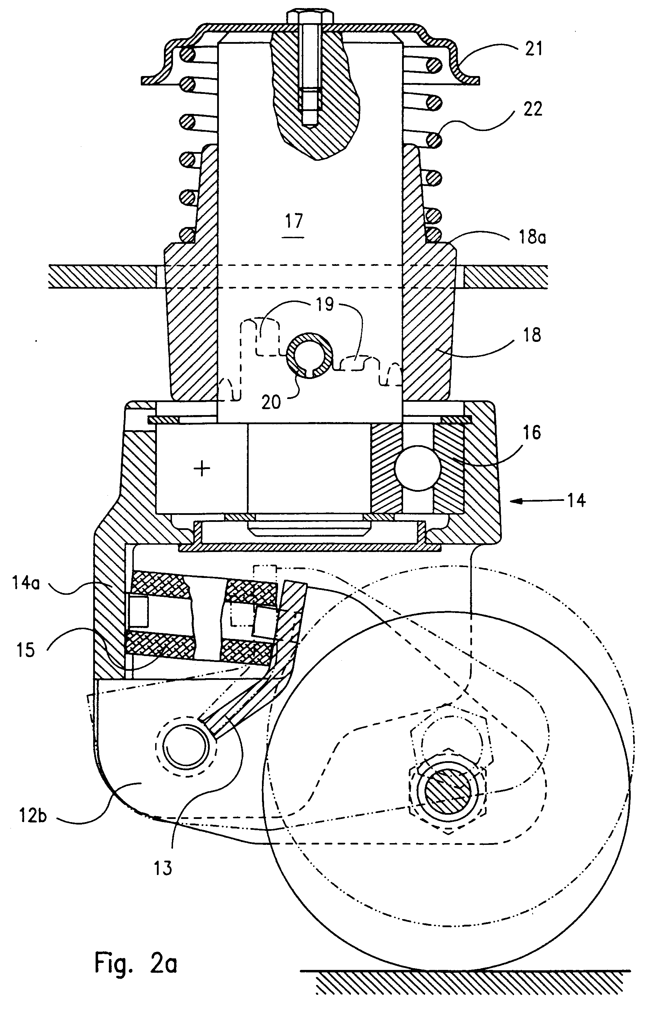

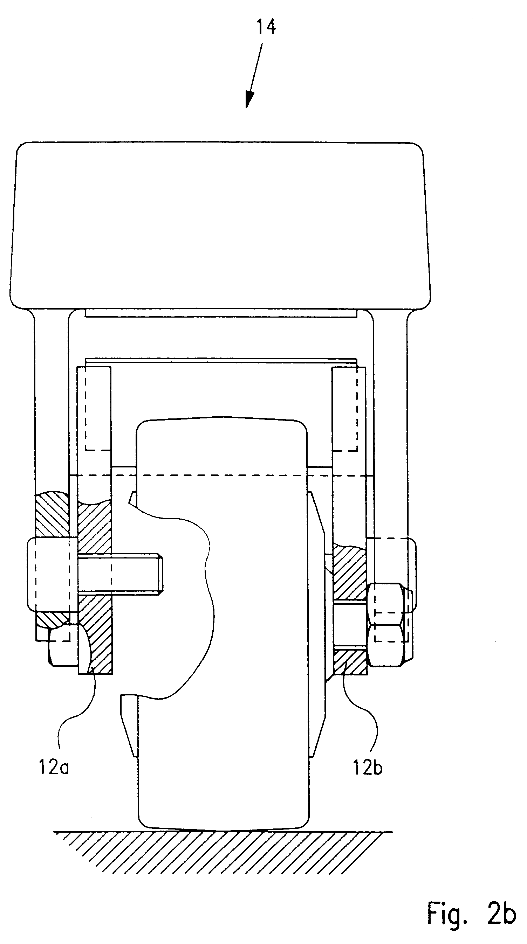

Figur 2a zeigt in Verbindung mit Figur 2b eine Anordnung mit einem Stützrad 4 bzw. 5. Das Stützrad 4 bzw. 5 ist an einem aus zwei Hälften 12a und 12b gebildeten Hebelarm 12 eines Kniehebels drehbar gelagert. Zwischen einem zweiten Hebelarm 13 des Kniehebels und einem an einer Wand einer Halterung 14 gebildeten Gegenlagerung 14a ist ein Gummi- oder elastisches Kunststoffelement 15 eingespannt, so daß das Stützrad 4 bzw. 5 gefedert bzw. unter Vorspannung zur Fahrbahn gedrückt ist. Die Halterung 14 weist ein Kugellager 16 auf, mit dessen Hilfe eine drehbare Verbindung zu einem vertikalen Zapfen 17 gebildet ist, der sich oberhalb des Stützrads 4 bzw. 5 befindet und in einer Buchse 18 angeordnet ist. Die Buchse 18 ist auf in den Figuren nicht gezeigte Weise fest mit dem Antriebsteil 1 des Gabelhubwagens verbunden.

Am unteren Ende der Buchse 18 sind mehrere stirnseitige, am Umfang verteilte Ausnehmungen 19 unterschiedlicher Tiefe angeformt. Dabei sind jeweils Paare von Ausnehmungen gleicher Tiefe gebildet, die sich, im Querschnitt durch den Zapfen 17 gesehen, derart gegenüberliegen, daß die Verbindungslinie der beiden Vertiefungen die Mittelachse des Zapfens 17 schneidet, wobei der Zapfen 17 im Bereich des Schnittpunkts eine radiale Durchgangsbohrung aufweist, in der ein beidseitig aus der Durchgangsbohrung herausragender Stift 20 angeordnet ist, dessen Enden in den Ausnehmungen eines zusammengehörigen Paares von Ausnehmungen angeordnet sind. Die auf das Stützrad einwirkenden Kräfte stützen sich also über die Halterung 14, das Lager 16, den Zapfen 17 und den Stift 20 in den Ausnehmungen 19 der Buchse 18 und somit am Antriebsteil 1 ab.

Der Zapfens 17 ist, unabhängig von der jeweiligen Höheneinstellung, so lang, daß er in jeder Höheneinstellung aus dem oberen Ende der Buchse 18 herausragt. Am oberen Ende des Zapfens 17 ist ein Teller 21 angeschraubt. Zwischen dem Teller 21 und einem an der Buchse 18 gebildeten Absatz 18a ist eine Druckfeder 22 angeordnet. Der Zapfen 17 ist dadurch in vertikaler Richtung nach oben federkraftbelastet. Wenn das Stützrad 4 bzw. 5 den Bodenkontakt auf unebener Fahrbahn verliert, wird dadurch verhindert, daß der Zapfen 17 aus der Buchse 18 nach unten herausgleitet. Die Enden des Stifts 20 bleiben also während des Betriebs normalerweise immer in den Ausnehmungen 19 eingerastet. Zur Höheneinstellung des Stützrads 4 bzw. 5 wird der Zapfen 17 durch Druck auf den Teller 21 zumindest soweit nach unten bewegt, bis die Enden des Stifts 20 außer Eingriff kommen mit dem Paar von Ausnehmungen 19, in die der Stift 20 zuvor eingerastet war. Sodann wird der Zapfen 17 um seine Mittelachse gedreht bis ein anderes Paar von Ausnehmungen 19 erreicht ist, das der gewünschten Höheneinstellung des Stützrads 4/5 bzw. der gewünschten Federvorspannung des Gummi- oder elastischen Kunststoffelements 15 entspricht.

Figur 3a zeigt eine Höheneinstellung, bei der die geringste Federvorspannung bzw. der größte Abstand (bei ungefedertem Stützrad) des Stützrads 4/5 zur Fahrbahn eingestellt ist. Eine solche Einstellung wird bei unebener Fahrbahnoberfläche und Lasten mit niedrigen Schwerpunkt gewählt werden.

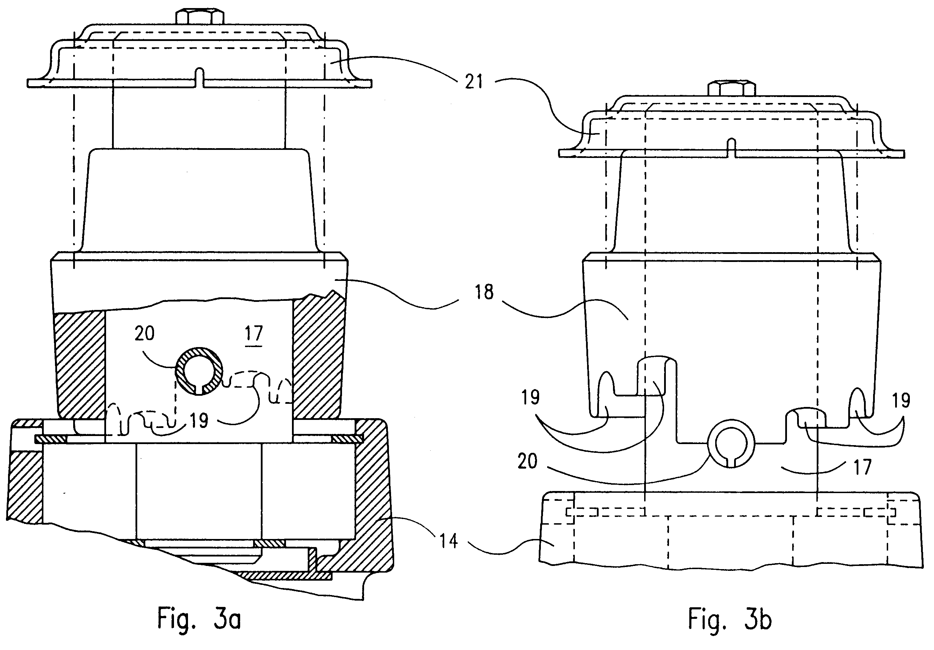

Figur 3b zeigt eine Höheneinstellung, bei der die größtmögliche Federvorspannung bzw. der kleinste Abstand (bei ungefedertem Stützrad) des Stützrads 4/5 zur Fahrbahn eingestellt ist. Eine solche Einstellung wird bei ebener Fahrbahnoberfläche und Lasten mit hohem Schwerpunkt gewählt werden, um eine größtmögliche Stabilität des Gabelhubwagens zu erreichen.

## Patentansprüche

1. Gabelhubwagen, mit einem Antriebsrad und seitlichen Stützrädern, wobei die Stützräder (4,5) höhenverstellbar sind und jeweils das Stützrad (4,5) in einer an einem vertikalen Zapfen (17) drehbar gelagerten Halterung (14) angeordnet ist und wobei der Zapfen (17) in einer mit dem Gabelhubwagen fest verbundenen Buchse (18) längsverschieblich ist, **dadurch gekennzeichnet**, daß der Zapfen (17) zumindest in zwei Stellungen arretierbar ist, und daß die Buchse (18) an einem stirnseitigen Ende Ausnehmungen (19) unterschiedlicher Tiefe aufweist, die zum Eingriff mit einem mit dem Zapfen (17) verbundenen Vorsprung vorgesehen sind.

2. Gabelhubwagen nach Anspruch 1, dadurch gekennzeichnet, daß die Ausnehmungen am Umfang des unteren stirnseitigen Endes der Buchse (18) verteilt sind.

3. Gabelhubwagen nach Anspruch 2, dadurch gekennzeichnet, daß jeweils Paare von Ausnehmungen (19) gleicher Tiefe gebildet sind, die sich, im Querschnitt durch den Zapfen (17) gesehen, derart gegenüberliegen, daß die Verbindungslinie der Vertiefungen (19) die Mittelachse des Zapfens (17) schneidet, wobei der Zapfen (17) eine radiale Durchgangsbohrung aufweist, in der ein beidseitig aus der Durchgangsbohrung herausragender Stift (20) angeordnet ist, dessen Enden in den Ausnehmungen (19) eines zusammengehörigen Paares von Ausnehmungen (19) angeordnet sind.

4. Gabelhubwagen nach Anspruch 2 oder 3, dadurch gekennzeichnet, daß der Zapfen (17) in vertikaler Richtung nach oben federkraftbelastet ist.

5. Gabelhubwagen nach Anspruch 4, dadurch gekennzeichnet, daß das obere Ende des Zapfens (17) in jeder Höheneinstellung aus dem oberen Ende der Buchse (18) herausragt und mit einem Teller (21) versehen ist, wobei zwischen dem Teller (21) und einem an der Buchse (18) gebildeten Absatz (18a) eine Druckfeder (22) angeordnet ist.

6. Gabelhubwagen nach einem der Ansprüche 1 bis 5, dadurch gekennzeichnet, daß in der das Stützrad (4,5) aufnehmenden Halterung (14) ein das Stützrad (4,5) zur Fahrbahn hin elastisch beaufschlagendes Vorspannungselement angeordnet ist.

7. Gabelhubwagen nach Anspruch 6, dadurch gekennzeichnet, daß in der Halterung (14) ein um eine horizontale Achse schwenkbarer Kniehebel angeordnet ist, an dessen ersten Hebelarm (12) das Stützrad (4,5) befestigt ist und zwischen dessen zweiten Hebelarm (13) und einer an der Halterung (14) gebildeten Gegenlagerung (14a) ein auf Druck belastetes Gummi- oder elastisches Kunststoffelement (15) angeordnet ist.

## Claims

1. Fork-lift truck with a driving wheel and lateral supporting wheels, the supporting wheels (4, 5) being adjustable in height and in each case disposed in a mounting (14) mounted pivotably on a vertical pivot (17), the pivot (17) being displaceable longitudinally in a bush (18) connected firmly to the fork-lift truck, characterised in that the pivot (17) is lockable in at least two positions, and in that in one end face the bush (18) exhibits recesses (19) of different depths which are provided for engagement with a projection connected to the pivot (17).

2. Fork-lift truck according to claim 1, characterised in that the recesses are distributed on the circumference of the lower end face of the bush (18).

3. Fork-lift truck according to claim 2, characterised in that in each case pairs of recesses (19) of the same depth are formed lying opposite one another, viewed in cross-section through the pivot (17), such that the connecting line of the recesses (19) cuts the centre axis of the pivot (17), the pivot (17) exhibiting a radial through hole in which is disposed a pin (20) which projects from the through hole on both sides and whose ends are disposed in the recesses (19) of a corresponding pair of recesses (19).

4. Fork-lift truck according to claim 2 or 3, characterised in that the pivot (17) is upwardly spring-loaded in the vertical direction.

5. Fork-lift truck according to claim 4, characterised in that the upper end of the pivot (17) projects from the upper end of the bush (18) in each height setting and is provided with a cup (21), a compression spring (22) being disposed between the cup (21) and a shoulder (18a) formed on the bush (18).

6. Fork-lift truck according to one of claims 1 to 5, characterised in that a preloading element acting elastically on the supporting wheel (4, 5) in the direction of the road surface is disposed in the mounting (14) accommodating the supporting wheel (4, 5).

7. Fork-lift truck according to claim 6, characterised in that the mounting (14) incorporates a bent lever which is pivotable about a horizontal axis and to whose first lever arm (12) the supporting wheel (4, 5) is fixed and between whose second lever arm (13) and an abutment (14a) formed on the mounting (14) is disposed a rubber or elastic plastic element (15) under compressive loading.

## Revendications

1. Chariot élévateur à fourche comprenant une roue motrice et des roues d'appui latérales, ces roues d'appui (4, 5) étant réglables en hauteur et chaque roue d'appui (4, 5) étant montée dans un support (14) à rotation sur un tourillon vertical (17), le tourillon (17) pouvant coulisser longitudinalement dans un manchon (18) relié solidairement au chariot élévateur à fourche, caractérisé en ce que
- le tourillon (17) peut se bloquer dans au moins deux positions et
- le manchon (18) comporte à l'une de ses extrémités frontales, des cavités (19) de profondeurs différentes destinées à recevoir en prise une saillie reliée au tourillon (17).

2. Chariot élévateur à fourche selon la revendication 1,
caractérisé en ce que
les cavités sont réparties à la périphérie de l'extrémité frontale inférieure du manchon (18).

3. Chariot élévateur à fourche selon la revendication 2, caractérisé en ce qu'
on a des paires de cavités (19) de même profondeur qui, vues à travers le tourillon (17), sont opposées, la ligne de liaison des cavités (19) coupant l'axe du tourillon (17), le tourillon (17) ayant un perçage radial traversant recevant une tige (20) dépassant des deux côtés du perçage et dont les extrémités viennent dans les cavités (19) d'une paire correspondante de cavités (19).

4. Chariot élévateur à fourche selon la revendication 2 ou 3,
caractérisé en ce que
le tourillon (17) est chargé par la force d'un ressort dirigé verticalement vers le haut.

5. Chariot élévateur à fourche selon la revendication 4,
caractérisé en ce que
l'extrémité supérieure du tourillon (17) dépasse de l'extrémité supérieure du manchon (18) quel que soit le réglage en hauteur, et comporte une coupelle (21), un ressort de compression (22) étant logé entre la coupelle (21) et un épaulement (18a) formé sur le manchon (18).

6. Chariot élévateur à fourche selon l'une des revendications 1 à 5,
caractérisé en ce que
le support (14) recevant la roue d'appui (4, 5) comporte un élément de précontrainte sollicitant élastiquement la roue d'appui (4, 5) en direction de la chaussée.

7. Chariot élévateur à fourche selon la revendication 6,
caractérisé en ce que
le support (14) comporte un levier à genouillère pivotant autour d'un axe horizontal, la roue d'appui (4, 5) étant fixée à son premier bras de levier (12), et un élément en caoutchouc ou en matière plastique élastique (15) chargé en pression étant monté entre le second bras de levier (13) et un contre-appui (14a) réalisé sur le support (14).
